# EUROPEAN PATENT APPLICATION

(11) **EP 4 592 801 A1**
(43) Date of publication of application: **30.07.2025**
(21) Application number: 24221279.3
(22) Date of filing: 18.12.2024
(51) Int. Cl.: G06F 3/01

(54) **INTERACTION METHOD, INTERACTION APPARATUS, STORAGE MEDIUM, AND TERMINAL DEVICE**

(30) Priority: 25.01.2024 CN 202410108735
(71) Applicant: Beijing Zitiao Network Technology Co., Ltd., Beijing 100190 (CN)
(72) Inventor: DONG, Yanyan, Beijing, 100028 (CN)
(74) Representative: Dentons UK and Middle East LLP

(57) **Abstract**

The present application discloses an interaction method, an interaction apparatus, a storage medium, and a terminal device. The method includes: presenting a user interaction interface in a three-dimensional environment, where an input box is displayed on the user interaction interface; displaying a fake keyboard in the three-dimensional environment in response to a first operation for the input box; displaying a fake screen in an adjacent area of a display location of the fake keyboard, where an extract box is displayed on the fake screen; and synchronously displaying corresponding input content in the extract box and the input box in response to a second operation for the fake keyboard. The present application can improve the convenience of interaction and input efficiency on an extended reality device, thereby providing users with a smoother and more natural input experience.

## Description

### TECHNICAL FIELD

The present application relates to the field of extended reality (XR) technologies, and in particular, to an interaction method and apparatus, a storage medium, and a device.

### BACKGROUND

At present, XR technologies are applied in a wider range of scenarios, which may include virtual reality (VR), augmented reality (AR), mixed reality (MR), etc.

In recent years, with the popularization of mobile devices and the rapid development of technologies, two-dimensional (2D) input methods have become standard configurations on the mobile devices such as mobile phones, tablet computers, and notebook computers, and play an increasingly critical role as primary means for users to interact with these devices. In the application of emerging extended reality devices, the performance of input methods remains stagnant at the era of the mobile phones, resulting in inconvenient and inefficient interaction.

### SUMMARY

Embodiments of the present application provide an interaction method and apparatus, a storage medium, and a device, which can improve the convenience of interaction and input efficiency on an extended reality device, thereby providing users with a smoother and more natural input experience.

According to an aspect, an embodiment of the present application provides an interaction method. The method includes:
displaying a three-dimensional environment generated by an extended reality device;
presenting a user interaction interface in the three-dimensional environment, wherein an input box is displayed on the user interaction interface;
displaying a fake keyboard in the three-dimensional environment in response to a first operation for the input box;
displaying a fake screen in an adjacent area of a display location of the fake keyboard, wherein an extract box is displayed on the fake screen; and
synchronously displaying corresponding input content in the extract box and the input box in response to a second operation for the fake keyboard.

According to another aspect, an embodiment of the present application provides an interaction apparatus. The apparatus includes:
a first display unit configured to display a three-dimensional environment generated by an extended reality device;
a second display unit configured to present a user interaction interface in the three-dimensional environment, wherein an input box is displayed on the user interaction interface;
a third display unit configured to display a fake keyboard in the three-dimensional environment in response to a first operation for the input box;
a fourth display unit configured to display a fake screen in an adjacent area of a display location of the fake keyboard, wherein an extract box is displayed on the fake screen; and
an interaction unit configured to synchronously display corresponding input content in the extract box and the input box in response to a second operation for the fake keyboard.

According to another aspect, an embodiment of the present application provides a computer-readable storage medium storing a computer program, where the computer program is adapted to be loaded by a processor, to perform the interaction method according to any one of the above embodiments.

According to another aspect, an embodiment of the present application provides a terminal device including a processor and a memory, where the memory stores a computer program, and the processor is configured to perform the interaction method according to any one of the above embodiments by invoking the computer program stored in the memory.

In the embodiments of the present application, the three-dimensional environment generated by the extended reality device is displayed; the user interaction interface is presented in the three-dimensional environment, where the input box is displayed on the user interaction interface; the fake keyboard is displayed in the three-dimensional environment in response to the first operation for the input box; the fake screen is displayed in the adjacent area of the display location of the fake keyboard, where the extract box is displayed on the fake screen; and the corresponding input content is synchronously displayed in the extract box and the input box in response to the second operation for the fake keyboard. According to the embodiments of the present application, the fake screen with a prompt box is displayed in the adjacent area of the display location of the fake keyboard, and the corresponding input content is synchronously displayed in the extract box and the input box in response to a related operation for the fake keyboard, which is equivalent to mapping the input box to the extract box that is in the same planar area as the fake keyboard, to convert an input action of a user in the three-dimensional environment into an input action thereof in a planar space, so as to optimize a relative location of the input box and the fake keyboard. In this way, when the user operates the fake keyboard with his/her head down, specific input content can more conveniently appear in the line of sight of the user, in order to achieve the effect that the user does not need to frequently raise his/her head to confirm during input. This can improve the convenience of interaction and input efficiency on the extended reality device, thereby providing the user with a smoother and more natural input experience.

### BRIEF DESCRIPTION OF THE DRAWINGS

To describe the technical solutions in the embodiments of the present application more clearly, the following briefly describes the accompanying drawings required for describing the embodiments. Apparently, the accompanying drawings in the following description show merely some embodiments of the present application, and those skilled in the art may derive other drawings from these accompanying drawings without creative efforts.
FIG. 1 is a schematic flowchart of an interaction method according to an embodiment of the present application.
FIG. 2 is a schematic diagram of a first application scenario of the interaction method according to an embodiment of the present application.
FIG. 3 is a schematic diagram of a second application scenario of the interaction method according to an embodiment of the present application.
FIG. 4 is a schematic diagram of a third application scenario of the interaction method according to an embodiment of the present application.
FIG. 5 is a schematic diagram of a fourth application scenario of the interaction method according to an embodiment of the present application.
FIG. 6 is a schematic diagram of a fifth application scenario of the interaction method according to an embodiment of the present application.
FIG. 7 is a schematic diagram of a structure of an interaction apparatus according to an embodiment of the present application.
FIG. 8 is a schematic diagram of a first structure of a terminal device according to an embodiment of the present application.
FIG. 9 is a schematic diagram of a second structure of the terminal device according to an embodiment of the present application.

### DETAILED DESCRIPTION

The technical solutions in the embodiments of the present application will be described clearly and completely below with reference to the accompanying drawings in the embodiments of the present application. Apparently, the described embodiments are only some rather than all of the embodiments of the present application. All other embodiments obtained by those skilled in the art based on the embodiments of the present application without creative efforts shall fall within the scope of protection of the present application.

The embodiments of the present application may be applied to various application scenarios, such as extended reality (XR), virtual reality (VR), augmented reality (AR), and mixed reality (MR).

First, some nouns or terms that appear in the description of the embodiments are explained as follows.

Virtual scene: it is a virtual scene that is displayed (or provided) when an application is running on a terminal or server. Optionally, the virtual scene is a simulated environment of a real world, a semi-simulated and semi-fictional virtual environment, or a purely fictional virtual environment. The virtual scene is either a two-dimensional virtual scene or a three-dimensional virtual scene. The virtual environment may be the sky, the land, the sea, etc., where the land includes environmental elements such as deserts and cities. The virtual scene is a scene for complete game logic of a virtual object controlled by a user

Virtual object: it is a dynamic object that can be controlled in the virtual scene. Optionally, the dynamic object may be a virtual character, a virtual animal, an anime character, etc. The virtual object is a character controlled by a player using an input device, or artificial intelligence (AI) set up in a virtual environment-based battle through training, or a non-player character (NPC) set up in a virtual scene-based battle. Optionally, the virtual object is a virtual character that engages in a competition in the virtual scene. Optionally, the number of virtual objects in the virtual scene-based battle is preset, or is dynamically determined based on the number of clients joining the battle, which is not limited in the embodiments of the present application. In a possible implementation, the user can control the virtual object to move, for example, to run, jump, crawl, etc., in the virtual scene, and can also control the virtual object to use skills, virtual props, etc. provided by the application to battle with other virtual objects. Optionally, the virtual object may alternatively be a static object that can be interacted with in the virtual scene, for example, a virtual entity, a virtual control, an interface element, a virtual prop, etc.

Extended reality (XR): it is a concept including virtual reality (VR), augmented reality (AR), and mixed reality (MR), representing a technology that allows for the creation of an environment where a virtual world is connected to a real world, enabling a user to interact with the environment in real time.

Virtual reality (VR): it is a technology that allows for the creation and experience of a virtual world. It generates a virtual environment through computation, and is a simulation of an interactive three-dimensional dynamic visual scene and an entity behavior based on fusion of multi-source information (the virtual reality mentioned herein includes at least visual perception, may further include auditory perception, tactile perception, and motion perception, and even includes gustatory perception, olfactory perception, etc.), immersing a user in a simulated three-dimensional environment, and realizing applications in a plurality of virtual environments such as in maps, games, videos, education, medical care, simulation, collaborative training, sales, assisted manufacturing, maintenance, and repair.

Augmented reality (AR): it is a technology for computing, in real time in a process in which a camera acquires an image, a camera posture parameter of the camera in a real world (or referred to as a three-dimensional world) and adding, based on the camera posture parameter, a virtual element to the image acquired by the camera. The virtual element includes, but is not limited to: an image, a video, and a three-dimensional model. An objective of the AR technology is to connect the virtual world to the real world for interaction on a screen.

Mixed reality (MR): it integrates a sensory input (for example, a virtual object) created by a computer and a sensory input from a physical setting or a representation thereof in a simulated setting. In some MR settings, the sensory input created by the computer may adapt to changes in the sensory input from the physical setting. In addition, some electronic systems configured to present the MR setting may monitor an orientation and/or a position relative to the physical setting, so that the virtual object can interact with a real object (that is, a physical element from the physical setting or a representation thereof). For example, the system may monitor motion, so that a virtual plant looks still relative to a physical building.

Augmented virtuality (AV): An AV setting is a simulated setting in which a computer-created setting or a virtual setting is incorporated with at least one sensory input from a physical setting. One or more sensory inputs from the physical setting may be a representation of at least one feature of the physical setting. For example, a virtual object may present the color of a physical element captured by one or more imaging sensors. For another example, a virtual object may present features that are consistent with actual weather conditions in the physical setting, for example, features recognized through a weather-related imaging sensor and/or online weather data. In another example, an augmented reality forest may have virtual trees and structures, but an animal may have features that are accurately reproduced from images taken of a physical animal.

Virtual field of view: it is a region in a virtual environment that a user can perceive through the lens of an extended reality device, and the perceived region is represented by an angle of the virtual field of view (FOV).

An extended reality device: it is a terminal that achieves extended reality effects, and may be generally provided in the form of glasses, a head-mounted display (HMD), or contact lenses, to implement visual perception and other forms of perception. Certainly, the extended reality device is not limited to these implementation forms, and may be further miniaturized or enlarged as needed.

The extended reality device described in the embodiments of the present application may include, but is not limited to, the following types:
a personal computer virtual reality (PCVR) device which performs computation related to a virtual reality function and data output by using a PC, where an external personal computer extended reality device achieves virtual reality effects by using data output by the PC;
a mobile extended reality device which supports setting of a mobile terminal (for example, a smartphone) in various manners (for example, a head-mounted display provided with a special slot), and is connected to the mobile terminal in a wired or wireless manner, where the mobile terminal performs computation related to a virtual reality function, and outputs data to the mobile extended reality device, for example, a virtual reality video is watched through an app on the mobile terminal; and
an integrated extended reality device which has a processor configured to perform computation related to a virtual function, and therefore has an independent virtual reality input and output function, with no need to be connected to a PC or a mobile terminal, providing a high degree of freedom of use.

In recent years, with the popularization of mobile devices and the rapid development of technologies, two-dimensional (2D) input methods have become standard configurations on the mobile devices such as mobile phones, tablet computers, and notebook computers, and play an increasingly critical role as primary means for users to interact with these devices. In the application of emerging extended reality devices, the performance of input methods remains stagnant at the era of the mobile phones, resulting in inconvenient and inefficient interaction.

Differences in input behaviors between conventional mobile devices and extended reality devices mainly lie in two aspects as follows.

1. Difference in relative locations of a keyboard layer and an input box: On a conventional mobile device such as a mobile phone, a keyboard and an input box are on the same plane. Therefore, when performing an input operation, a user only needs to lower his/her head and tap on the keyboard, and then can intuitively see a change in content in the input box. However, in a three-dimensional environment presented by the extended reality device, the keyboard and the input box are usually not on the same plane. The user needs to lower his/her head to operate the keyboard and then raise his/her head to check the content in the input box. This frequent head movement not only increases the operation burden of the user, but also greatly reduces the input efficiency, as well as affecting the comfort of the user

2. Difficulty in operating content in an input box: For a mobile phone user, it is a basic operation to easily add, delete or modify content, such as text and pinyin, in the input box. However, in the three-dimensional environment presented by the extended reality device, these seemingly simple operations become extremely difficult due to an increased distance between the input box and the user. The user needs to adopt an additional interaction mode in order to select the input box for modification, resulting in a great difficulty for the user to process the content in the input box. This undoubtedly increases the complexity of the operation and further affects the input experience of the user.

In conclusion, the 2D input methods commonly applied to the conventional mobile devices have obvious problems of inconvenient and inefficient interaction on the extended reality devices.

Therefore, the embodiments of the present application provide an interaction method, which can improve the convenience of interaction and input efficiency on an extended reality device, thereby providing users with a smoother and more natural input experience.

They are respectively described in detail below. It should be noted that the order of description of the following embodiments does not constitute a limitation on the order of precedence for the embodiments.

Various embodiments of the present application provide an interaction method. The method may be performed by a terminal or a server, or by both the terminal and the server. In the embodiment of the present application, description is made by using an example in which the interaction method is performed by a terminal device.

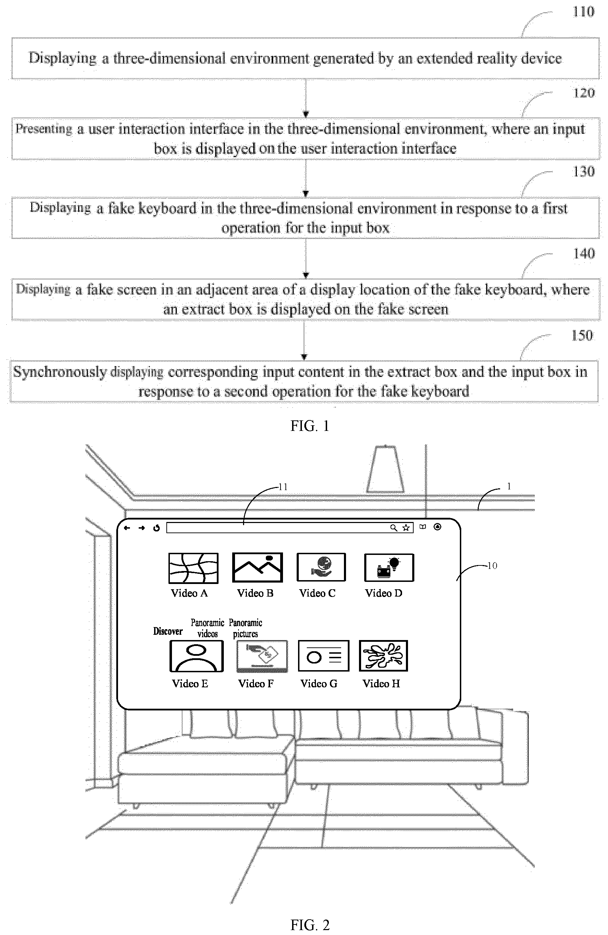

Referring to FIG. 1 to FIG. 6, FIG. 1 is a schematic flowchart of an interaction method according to an embodiment of the present application, and FIG. 2 to FIG. 6 are all schematic diagrams of application scenarios of the interaction method according to an embodiment of the present application. The method may be applied to a terminal device. The terminal device may include any one of an extended reality device, a virtual reality device, an augmented reality device, and a mixed reality device. The method includes the following steps 110 to 150.

Step 110: Displaying a three-dimensional environment generated by an extended reality device.

First, a realistic three-dimensional environment is constructed by using technologies of the extended reality device. This environment provides a user with an immersive experience that makes the user feel like he/she is in a real and virtual world. The three-dimensional environment generated by the extended reality device includes not only a real space environment, but also a virtual space environment. The three-dimensional environment may be a virtual reality environment or an extended reality environment.

First, the extended reality device may have a powerful graphics processing capability, to generate a high-quality three-dimensional environment in real time. This usually involves using advanced graphics rendering technologies, such as ray tracing, shadow mapping, and texture mapping, to create a realistic three-dimensional scene.

In order to provide the immersive experience, the extended reality device may also have depth perception and stereo imaging capabilities. This can be implemented by using technologies such as an infrared sensor, a depth camera, or a laser radar that can capture detailed information about surroundings and transform the detailed information into a three-dimensional model.

When the three-dimensional environment is generated, head and eye movements of the user may also be considered. The extended reality device may have a high-precision motion tracking function that can capture inputs such as a head posture, an eye movement, and a gesture, of the user in real time, and adjust a viewing angle and details of the three-dimensional environment based on these inputs, to provide a natural immersive experience.

In order to enhance the interaction experience of the user, the three-dimensional environment may also be integrated with a user interaction interface. The user interaction interface can be customized according to requirements of an application, to provide various functions and controls, such as menus, buttons, and input boxes. These interface elements may be presented in a realistic manner in the three-dimensional environment, enabling the user to interact intuitively.

Step 120: Presenting a user interaction interface in the three-dimensional environment, where an input box is displayed on the user interaction interface.

The user interaction interface is displayed in the three-dimensional environment. This usually involves the use of specific virtual reality technologies, for example, devices such as a head-mounted display and a joystick, to create and display the three-dimensional environment. In this three-dimensional environment, the user may see a virtual image generated by a computer, and obtain a visual feedback through a device such as the head-mounted display. When the user interaction interface is displayed, it is necessary to ensure that the user interaction interface can be clearly and accurately presented to the user in the three-dimensional environment. An interface position, interface content, a layout, a color, etc. of the user interaction interface may be preset to provide a user-friendly interaction experience. In addition, it is necessary to ensure that the interaction between the user interaction interface and other virtual objects (such as virtual entities or virtual characters) in the three-dimensional environment can be performed normally, so that the user can interact with a virtual environment through various operations.

For example, the user interaction interface may be a user interaction interface corresponding to a client. The user interaction interface may be customized according to specific requirements of the client, to provide functions and information required by the user. For example, a plurality of clients or applications may be presented in the three-dimensional environment, and in response to an operation of starting a client, a user interaction interface corresponding to the started client may be presented in the three-dimensional environment, where an input box is also displayed on the user interaction interface.

The input box may be set on the user interaction interface. The input box is an important interface for the user to interact with a system, through which the user can input information such as text, numbers, and instructions. The input box needs to fit the overall style and visual effect of the three-dimensional environment.

In order to ensure that the user can easily find and use the input box, some signs and markers may be used in the user interaction interface. For example, an obvious label or icon may be used to identify the location of the input box, or a dynamic effect may be added around the input box to attract the attention of the user

As shown in FIG. 2, a user interaction interface 10 is presented in a three-dimensional environment 1, where an input box 11 is displayed on the user interaction interface 10. For example, the user interaction interface 10 may be a user interaction interface corresponding to a video playback client.

Step 130: Displaying a fake keyboard in the three-dimensional environment in response to a first operation for the input box.

For example, the first operation includes, but is not limited to, a somatosensory control operation, a gesture control operation, an eye movement operation, a touch control operation, a voice control instruction, or an operation for an external control device. For example, the user selects the input box in the user interaction interface through a preset button on a controller (for example, a joystick of a VR device) that can trigger extended reality, and checks the input box through, for example, a virtual cursor, to trigger an edit instruction for the input box, so that the fake keyboard is woken up and then displayed in the three-dimensional environment. A plurality of virtual buttons are displayed on the fake keyboard.

For example, the gesture control operation is also a common mode. The user may make specific gestures such as pinching, swiping or tapping in the three-dimensional environment, to trigger the first operation for the input box. The system recognizes these gestures and then displays the fake keyboard in the three-dimensional environment.

For example, the eye movement operation is also a novel human-computer interaction mode. The system may detect eye movements of the user by using an eye movement tracking technology. When the user's gaze focuses on the input box, this may be considered as the first operation for the input box, and the fake keyboard may then be displayed in the three-dimensional environment.

For example, the extended reality device also supports a touch function, which allows the user to click or touch the input box directly on the user interaction interface presented in the three-dimensional environment, to trigger the first operation for the input box, and then the fake keyboard is displayed in the three-dimensional environment.

For example, the voice control instruction is also a convenient operation mode. The user may select the input box or issue the edit instruction by voice, which may be considered as the first operation for the input box, and the fake keyboard is then displayed in the three-dimensional environment.

For example, the user using the external control device, such as a gamepad or a remote control, may perform a corresponding operation by connecting to the extended reality device, to trigger the first operation for the input box, and then the fake keyboard is displayed in the three-dimensional environment.

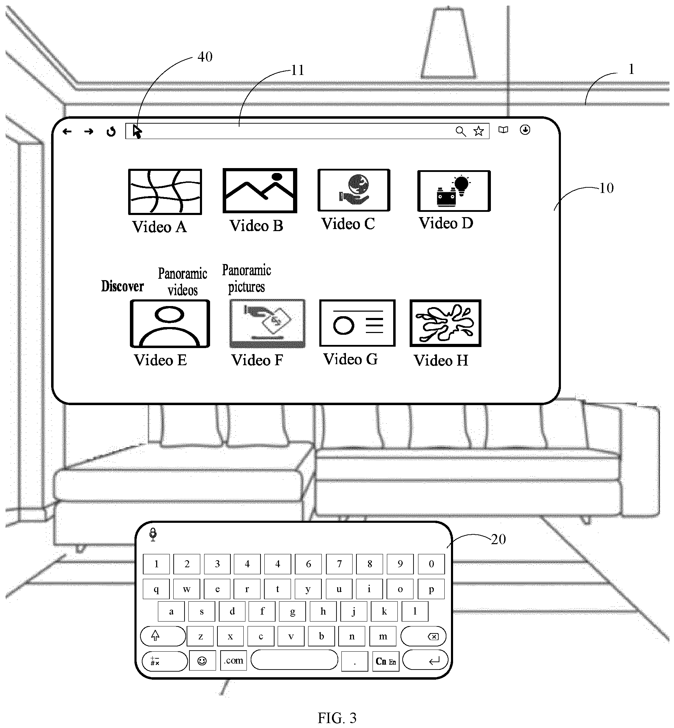

As shown in FIG. 3, a user interaction interface 10 is presented in a three-dimensional environment 1, where an input box 11 is displayed on the user interaction interface 10. For example, the user interaction interface 10 may be a user interaction interface corresponding to a video playback client. In response to a first operation for the input box 11, such as by selecting the input box 11 through a virtual cursor 40 to trigger an edit instruction for the input box 11, a fake keyboard 20 is woken up, and the fake keyboard 20 is then displayed in the three-dimensional environment 1.

Step 140: Displaying a fake screen in an adjacent area of a display location of the fake keyboard, where an extract box is displayed on the fake screen.

The fake screen should be displayed adjacent to the fake keyboard, which facilitates providing reference for and operation by the user during input. The fake screen may be designed to be harmonized with the overall style of the three-dimensional environment, and the ease of use and aesthetics of the user interaction interface also need to be considered.

On the fake screen, an extract box is set to display content input by the user or information related to the input content.

The extract box is associated with the input box displayed on the user interaction interface, and the content displayed in the extract box may be synchronously associated with the input box for synchronous display. That is, the extract box should correspond to the input box, to ensure that when inputting content into the input box, the user can intuitively see the input content displayed in the extract box. The user can conveniently view and check the input content, to avoid an input error or omission. In order to ensure the accuracy of synchronous display, the association between the extract box and the input box should be established based on a unified data model. This means that the input box and the extract box should share the same data source, to maintain data consistency during the input process. This association may also be implemented through a programming interface or data binding. The extended reality device can provide related interfaces, so that a developer can associate the extract box with the input box. Through these interfaces, the developer can implement a function of synchronous display of the extract box and the input box in an application.

For example, in order to enhance the interaction experience of the user, the extract box should also be simple in design, and is easy to use. The size and location of the extract box may be reasonably arranged based on the input content and the location of the fake keyboard, so that the user can easily view and edit the input content.

In addition, in order to improve the input efficiency, the extract box may have some intelligent functions. For example, when the user inputs text, the extract box may update and display the input content in real time, so that the user can check and edit the input content at any time. In addition, the extract box may also provide a corresponding prompt and suggestion based on an operation of the user, to help the user complete input and extraction tasks more quickly.

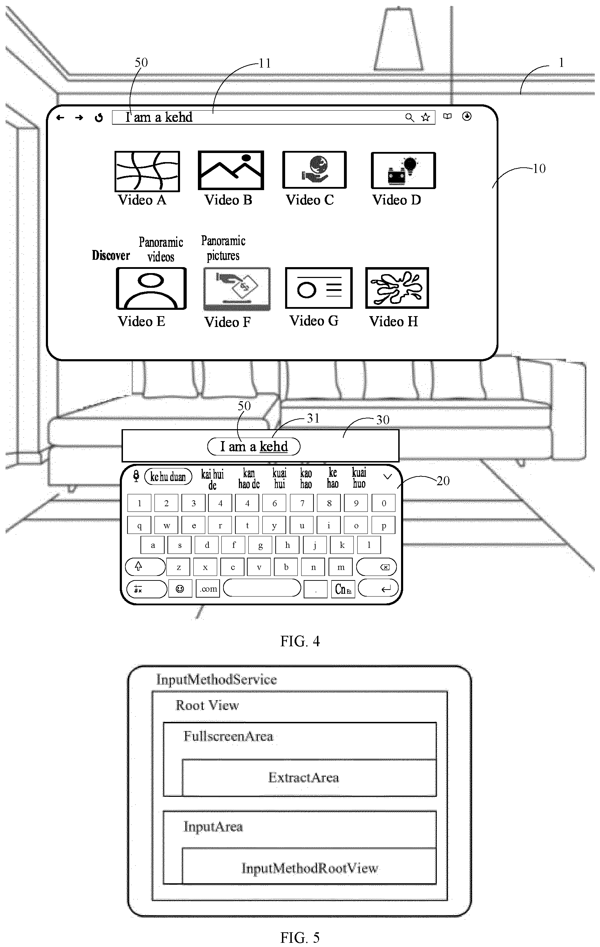

As shown in FIG. 4, a user interaction interface 10 is presented in a three-dimensional environment 1, where an input box 11 is displayed on the user interaction interface 10. For example, the user interaction interface 10 may be a user interaction interface corresponding to a video playback client. In response to a first operation for the input box 11, such as by selecting the input box 11 through a virtual cursor 40 to trigger an edit instruction for the input box 11, a fake keyboard 20 is woken up, and the fake keyboard 20 is then displayed in the three-dimensional environment 1. In addition, a fake screen 30 is displayed in an adjacent area of a display location of the fake keyboard 30, where an extract box 31 is displayed on the fake screen 30. For example, the fake screen 30 may be displayed in the adjacent area that is on the same horizontal plane as the display location of the fake keyboard 30.

In some embodiments, the displaying the fake screen in the adjacent area of the display location of the fake keyboard includes:
displaying the fake screen at a plane extension of a plane on which the display location of the fake keyboard is located.

A plane extension relationship between the fake keyboard and the fake screen may be adjusted according to specific application scenarios and user requirements. This means that the fake screen may be displayed at a different location on the same plane as the fake keyboard, or may be extended, as appropriate, in a vertical or horizontal direction of the fake keyboard.

For example, if the plane extension is at a different location on the same plane as the fake keyboard, this is equivalent to mapping the input box to the extract box that is in the same planar area as the fake keyboard, to convert an input action of the user in the three-dimensional environment into an input action thereof in a planar space, so as to optimize a relative location of the input box and the fake keyboard. In this way, when the user operates the fake keyboard with the head down, specific input content can more conveniently appear in the line of sight of the user, in order to achieve the effect that the user does not need to frequently raise his/her head to confirm during input.

For example, if the plane extension is at a location of appropriate extension in the vertical direction of the fake keyboard, more space can be allocated to the fake screen and the extract box in the vertical direction, making the extract box on the fake screen more prominent and easier to see. For example, when performing inputting on the fake keyboard, the user can intuitively see the extract box on the fake screen that is located above the fake keyboard without having to raise his/her head, to check the input content or perform other related operations. This layout eliminates the need for the user to frequently raise his/her head or avert his/her gaze, thereby improving the input efficiency and accuracy.

The fake screen is displayed at the plane extension of the fake keyboard, so that a larger operation space and a richer information presentation can be provided for the user. For example, when the user needs to input relatively long text or perform a multi-step operation, the fake screen may be correspondingly expanded next to the fake keyboard, to provide more input options or operation buttons.

In addition, this plane extension design can also enhance the association between the fake keyboard and the fake screen. The fake screen is placed at the extension of the fake keyboard, so that the user can more intuitively understand a relationship between the fake screen and the fake keyboard, and easily switch and operate between the fake screen and the fake keyboard.

In order to further improve the interaction efficiency and user satisfaction, a dynamical adjustment manner may also be considered for the design of the fake screen at the plane extension. This means that the fake screen may be dynamically expanded and collapsed according to operations and requirements of the user, to adapt to different interaction scenarios and task requirements.

Setting the fake screen at the plane extension of the fake keyboard is a flexible layout manner, which can provide a larger operation space and a richer information presentation for the user. Through the dynamic adjustment and association enhancement, this layout manner can also improve the user's interaction efficiency and satisfaction. This helps to improve the practicability of the extended reality device in practical application and the user experience.

Step 150: Synchronously displaying corresponding input content in the extract box and the input box in response to a second operation for the fake keyboard.

For example, the second operation includes, but is not limited to, a somatosensory control operation, a gesture control operation, an eye movement operation, a touch control operation, a voice control instruction, or an operation for an external control device.

A corresponding operation command may be generated in response to the second operation for the fake keyboard. Common operation commands include, but are not limited to, button select, character input, delete, copy and paste, etc. These operation commands are used to instruct the generation of corresponding input content, so that the corresponding input content is synchronously displayed in the extract box and the input box.

As shown in FIG. 4, in response to the second operation for the fake keyboard 20, corresponding input content 50 is synchronously displayed in the extract box 31 and the input box 11, for example, the current input content 50 is "I am a kehd".

To implement this synchronous display, an efficient input processing mechanism is required. The system needs to capture a user operation on the fake keyboard in real time, and then convert the operation into corresponding text or commands. In addition, the system also needs to update the input content into the extract box and the input box in real time, to maintain synchronization.

In order to improve the user experience, a synchronous display process should be as smooth and latency-free as possible. By means of quick processing and rendering, the user can immediately see the corresponding content in the extract box and the input box while operating the fake keyboard, thereby improving the input efficiency and accuracy.

In addition, in order to further enhance the interaction experience of the user with the fake keyboard, some intelligent elements may be added during the synchronous display process. For example, when the user inputs a specific character or word, the system may automatically predict a next possible character or word, and give a prompt on the fake keyboard. This can help the user to complete the input task more quickly, thereby improving the input efficiency.

As shown in FIG. 4, when the user inputs specific characters "kehd", the system may automatically predict a next possible character or word, and give a prompt in a text display area of the fake keyboard. For example, possible characters that are automatically predicted include "ke hu duan", "kai hui de", "kan hao de", "kuai hui", "kao hao", "ke hao", and "kuai huo". For the possible characters or words, the system may also display a visual recommendation indication to indicate a character or word with the highest matching degree. The visual recommendation indication may be highlighting text, highlighting background, making a font bold, setting a select box around text, etc. For example, for "ke hu duan", a visual recommendation indication is displayed, and the visual recommendation indication is setting the select box around text.

For example, input habits and preferences of different users may also be considered during the synchronous display process. For example, some users may prefer to see word-by-word updates of the input content, whereas some other users may prefer to see a one-time update of an entire sentence or paragraph. Therefore, the system should provide a configurable setting option that allows the user to adjust a synchronous display manner according to his/her own preferences.

In some embodiments, the synchronously displaying the corresponding input content in the extract box and the input box in response to the second operation for the fake keyboard includes:
obtaining, in response to the second operation for the fake keyboard, input content that is input through the fake keyboard; and
sending the input content to the extract box and the input box through an InputConnection interface for synchronous display.

When the user performs the second operation on the fake keyboard, the system captures the operation in real time and converts the operation into the corresponding input content. The input content may be a character, a word, a phrase, or other forms of text input. By recognizing the operation of the user, the system can accurately obtain the input content that is input through the fake keyboard.

In order to implement the synchronous display between the extract box and the input box, the system needs to send the input content to a corresponding display area. This is usually completed through an InputConnection interface. InputConnection is an interface used to process communication between an input method and an application in Android development. It functions as a bridge in an input method framework that is used to connect the input method to an application that receives an input. InputConnection allows the input method to interact with the application, to send and receive data input by the user. It provides a method to read and modify text content in the input box, and process a cursor location and an original keyboard event, etc. For example, when the user enables an input method, InputMethodService creates an InputConnection object, to enable communication with an application that receives an input. The application may interact with the input method through the InputConnection interface, such as obtaining text input by the user, setting a cursor location, or requesting a focus. In the embodiments of the present application, the InputConnection interface is used to connect the fake keyboard to the input box and the extract box that receive an input, such that the corresponding input content is synchronously displayed in the extract box and the input box in response to the second operation for the fake keyboard.

During the sending process, the input content may be transmitted and displayed in a variety of forms. For example, the input content may be updated, as a text string, into the extract box and the input box word by word, or may be displayed fully at once as an entire sentence or paragraph. In addition, the system may also format or beautify the input content according to preferences and settings of the user, to enhance the visual effect of display.

In order to implement this process, the extended reality device needs to have an efficient communication mechanism and data processing capability. The device needs to be able to quickly process the operation of the user, generate the corresponding input content, and send the content to the display area through the InputConnection interface. In addition, the device also needs to ensure the real-time performance and accuracy of data transmission, to ensure smooth and accurate synchronous display.

In some embodiments, the method further includes:
obtaining updated input content in response to an update operation for the input content displayed in the extract box, and synchronously displaying the updated input content in the input box.

When seeing the input content in the extract box, the user may need to edit or modify the content. In order to meet this requirement, the system needs to be able to recognize and process these update operations. These update operations may include, but are not limited to, edit operations such as selection, deletion, insertion, and substitution.

When the user performs these update operations in the extract box, the system needs to capture these update operations in real time and convert these update operations into corresponding instructions. These instructions instruct the system to make modification to the input content accordingly. For example, if the user selects and deletes a part of text from the extract box, the system will delete the corresponding part from the input content accordingly. Once the system has received an update operation instruction from the user, the system can obtain the updated input content. This can be implemented by modifying a corresponding data structure directly in a memory, or by communicating with the user through the InputConnection interface to receive the updated input content.

After obtaining the updated input content, the system needs to synchronously display the updated input content in the input box. This means that the content in the input box also needs to be modified accordingly, to reflect a change made by the user in the extract box. By maintaining the synchronous display between the input box and the extract box, the user can intuitively see a final input result.

In the embodiments of the present application, the user can manage the input content through the extract box on the fake screen, which reduces the difficulty in performing operations, such as addition, deletion, and modification, in the input box in a conventional input manner In this way, the process of operating the input content in the input box is simplified, and the input efficiency of the user is improved.

In some embodiments, the synchronously displaying the updated input content in the input box includes:
sending the updated input content to the input box through the InputConnection interface for synchronous display.

When the user performs edit and modify operations in the extract box, the system captures these operations and generates corresponding updated input content. The content may be a change in the text, character, or cursor location.

Then, the system sends the updated input content to the input box through the InputConnection interface. The InputConnection interface functions as a bridge between the extract box and the input box, and is responsible for data transmission and processing. Through this interface, the updated input content is sent to the input box in a correct format and protocol for synchronous display. During the sending process, some processing and conversion may be performed on the updated input content, to ensure that the updated input content is correctly displayed in the input box. For example, a specific protocol and processing logic may be required for the change in the cursor location, to ensure that the cursor location is accurately updated in the input box.

In addition, the InputConnection interface further provides other functions, such as reading and modifying text content in the input box, and processing the cursor location and an original keyboard event. These functions enable the input method to interact more deeply with the application, providing a richer and more flexible input experience for a user

In some embodiments, the method further includes:
dynamically adjusting a size of the extract box based on the input content.

When the user inputs content on the fake keyboard, the extract box automatically adjusts its size based on the number of input characters. This is because as more input content is added, more space is needed to display more characters. If the size of the extract box remains unchanged, the extract box may become overcrowded, making it difficult for the user to see or edit the input content. Therefore, the system can dynamically adjust the size of the extract box according to the length of the input content. When the user inputs short text, the extract box may be kept relatively small in size, to save on display space and make other interface elements more accessible. However, when the user inputs long text, the system may automatically increase the size of the extract box, to accommodate more characters and improve readability.

The method for dynamically adjusting the size of the extract box may be implemented through a variety of techniques. For example, the system may monitor the length of the input content, and calculate, based on the length value, an optimal size required for the extract box. Once the optimal size is determined, the system may apply it to a display area of the extract box by using a graphics rendering technique.

In addition, in order to provide a more natural and intuitive experience, the adjustment to the size of the extract box may be combined with the interaction operations of the user. For example, when the user scrolls or zooms in/out the display area to view more content, the system may dynamically adjust the size of the extract box based on these operations. This can provide the user with a more consistent and personalized interaction experience.

In the embodiments of the present application, by dynamically adjusting the size of the extract box, the system can automatically optimize the space allocation of the display area based on the content input by the user, thereby improving the readability and user experience. This provides the user with a more flexible and adaptable extended reality environment that allows the user to process and view the input content more efficiently.

In some embodiments, the method further includes:
dynamically adapting a size of the fake screen based on the dynamically adjusted size of the extract box.

When the size of the extract box is dynamically adjusted based on the input content, the size of the fake screen also needs to be adjusted accordingly. This is because the fake screen, as the display area in the extended reality environment, needs to be coordinated with the extract box and other interface elements, to ensure the clarity and consistency of the entire interface.

In order to implement dynamic adaptation of the size of the fake screen, the system needs to monitor a current size of the extract box. Once the size of the extract box changes, the system may calculate, based on the value of a new size, an optimal size required for the fake screen. This calculation process may be performed based on a certain algorithm or a preset mapping relationship, for example, the size of the fake screen is adjusted based on the width and height of the extract box.

When the optimal size of the fake screen is determined, the system may apply it to the display area by using a graphics rendering technique. This may involve adjusting the boundary, location, and proportion of the fake screen accordingly, to adapt to the new size.

In addition, the dynamic adaptation of the size of the fake screen may also be combined with the interaction operations of the user. For example, when the user moves, zooms in or out, or rotates the fake screen through gestures or operations, the system may monitor these operations and dynamically adjust the size of the fake screen based on an intention of the user. This can provide the user with a more natural and intuitive interaction experience.

The dynamic adaptation of the size of the fake screen not only helps to improve the user experience, but also brings benefits in terms of resource utilization and performance optimization. By dynamically adjusting the size of the fake screen, the system can automatically allocate appropriate screen resources according to a current requirement and scenario, thereby improving the overall performance and a response speed.

To sum up, through this dynamic adaptation mechanism, the system can automatically adjust the size of the fake screen based on the length of the content input by the user and an operation intention of the user, to maintain the clarity and consistency of the interface, and improve the user experience and resource utilization efficiency.

In some embodiments, the method further includes:
hiding the fake screen in response to an input completion instruction for the input content.

When completing the input of the input content, the user may issue an input completion instruction to indicate that the content in the input box no longer needs to be modified or added. This instruction may be a specific operation, event, or signal, such as pressing a button "Complete" on the fake keyboard, or performing no input operation for a long time. When receiving the input completion instruction, the system hides the fake screen. This means that the fake screen will no longer be displayed in the extended reality environment, which makes the interface elements in the extended reality environment simpler and clearer. The fake screen may be hidden in different manners, such as by fading out, disappearing immediately, or being smoothly zoomed out to be transparent.

One of the benefits of hiding the fake screen is to reduce interference of unnecessary interface elements. After the user completes the input, it is no longer necessary to keep the fake screen displayed, to avoid distracting the attention of the user or confusing the user. The fake screen is hidden, so that the user can focus more on the input content or other related tasks.

In addition, hiding the fake screen also helps to make operations simpler and more efficient. The user does not need to manually turn off or adjust the fake screen, and the system will automatically perform this operation. This provides the user with a more intuitive and automated experience, reducing unnecessary operation steps and time costs.

It should be noted that hiding the fake screen does not mean removing the fake screen completely. In some cases, the user may need to access the fake screen again for further editing or input. Therefore, the system may be designed to have a function of redisplaying the fake screen when the user needs it. This can be implemented by providing a corresponding operation or trigger condition, for example, by pressing the button "Complete" again or executing a specific navigation command. For example, the fake screen is displayed again in response to a related operation on the input box.

Through this mechanism, the system can automatically adjust the display state of the fake screen based on the operation intention of the user, to improve the user experience, reduce interference, and simplify the operation process. This provides the user with a more efficient and convenient extended reality environment that allows the user to focus more on the task and the content itself.

In some embodiments, the method further includes:
adjusting a display location of the fake screen based on a gaze focus of a user.

The gaze focus of the user may be monitored by using an eye movement tracking technology or a similar gaze tracking technology. This technology can determine the area or object that the user is gazing at by analyzing the movement and location of his/her eyes. When the gaze focus of the user is detected, the location and direction of the gaze focus may be analyzed, to determine content or interface elements that the user expects to see. For example, if the user is gazing at a specific key on the fake keyboard, the system may adjust the location of the fake screen accordingly, to bring it closer to a display location of the key.

Adjusting the display location of the fake screen based on the gaze focus of the user can providing improved interaction efficiency and comfort for the user. The fake screen is set near the gaze focus of the user, so that the user can more easily interact with the fake screen without frequently moving his/her head or eyes to view and operate the fake screen.

In addition, this adjustment can also enhance a sense of immersion of the user. When the location of the fake screen matches the gaze focus of the user, the user may have a more natural and comfortable feeling. This sense of immersion can increase the level of engagement and quality of experience of the user

In addition, the system may also consider requirements and preferences of different users, to provide a more personalized and customized interaction experience.

For example, in a schematic diagram of an input method framework of the extended reality device as shown in FIG. 5, the layout of an extract area independent of a keyboard area is designed in the input method framework, in which an extract box in the fake screen can be accommodated.

The entire input method framework is implemented based on InputMethodService. InputMethodService is a class used in Android system development to process logic of the input method. It provides standard implementation of an input method, and allows developers to customize and extend the input method. It is mainly used to manage the logic, interaction, and a life cycle of the input method. It provides some methods and callback functions, allowing the developers to conveniently customize the input method.

A root view is set. The root view, usually a view that holds all other views, is a root node in a tree structure and a parent node of all child views.

FullscreenArea is set in the root view. ExtractArea is set in FullscreenArea, where ExtractEditTeText 31 of the fake screen 30 as shown in FIG. 4 may be set in ExtractArea.

ExtractArea is displayed only in FullscreenMode. Because the client and the input method are both independent windows in the extended reality device, the input method of the extended reality device is in FullscreenMode by default.

### ExtractArea

InputArea is set in the root view. Furthermore, InputMethodRootView is set in InputArea. InputMethodRootView is usually a root view component in a user interface that is used to display an input method interface. In Android development, InputMethodRootView is a layer of view components used to display the input method interface. It is usually used as a bridge between the input method interface and an application interface, to manage the display and hiding of the input method interface, and process the interaction between the user and the input method interface. In the embodiments of the present application, the fake keyboard 20 as shown in FIG. 4 may be constructed based on InputMethodRootView.

The input content displayed in the extract box of the fake screen is obtained and updated from an InputConnection interface. InputConnection is an interface used to process communication between an input method and an application in Android development. It functions as a bridge in an input method framework that is used to connect the input method to an application that receives an input. InputConnection allows the input method to interact with the application, to send and receive data input by the user. It provides a method to read and modify text content in the input box, and process a cursor location and an original keyboard event, etc. For example, when the user enables an input method, InputMethodService creates an InputConnection object, to enable communication with an application that receives an input. The application may interact with the input method through the InputConnection interface, such as obtaining text input by the user, setting a cursor location, or requesting a focus. In the embodiments of the present application, the InputConnection interface is used to connect the fake keyboard to the input box and the extract box that receive an input, such that the corresponding input content is synchronously displayed in the extract box and the input box in response to the second operation for the fake keyboard.

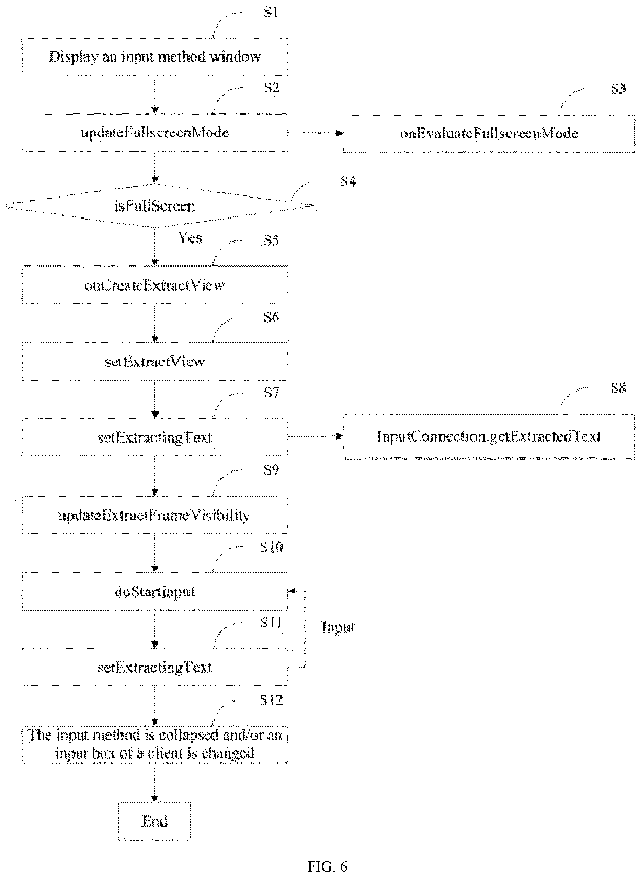

For example, in step 150, the corresponding input content is displayed in the extract box in response to the second operation for the fake keyboard, which may be specifically implemented through the process as shown in FIG. 6.

S1: Display an input method window. In the embodiments of the present application, the input method window is a fake keyboard displayed in a three-dimensional environment.

S2: updateFullscreenMode. This step may be used to update a full screen display mode of an application. If there is a need for the application to enter a full screen mode with a status bar and a navigation bar hidden, this may be implemented by calling the function updateFullscreenMode.

S3: onEvaluateFullscreenMode. This step may be used to evaluate whether the application should enter the full screen mode. For example, when interacting with the interface, the user may want to dynamically evaluate whether the application should enter the full screen mode. Based on the function onEvaluateFullscreenMode, it may be determined, based on a current condition, whether the full screen mode needs to be updated.

S4: isFullScreen. This step may be used to check whether the application is currently in FullscreenMode. For example, by calling the function isFullScreen, it may be checked whether the application has entered the full screen mode. In the embodiments of the present application, when it is detected that the input method of the extended reality device has entered the full screen mode, step S5 is further performed.

S5: onCreateExtractView. This step may be used to create an extract view. In the embodiments of the present application, the extract view is a fake screen for displaying an extract box.

S6: setExtractView. This step may be used to set or update the extract view. After an extract view has been created, the extract view may be set at a location or may be associated with a component by using this method. In the embodiments of the present application, the extract view is the fake screen for displaying the extract box. After a fake screen has been created, the fake screen can be set at a location, for example, in the adjacent area of the display location of the fake keyboard, or may be associated with a component by calling the function setExtractView.

S7: setExtractingText. This step may be used to set or update text content that is being extracted or cut and pasted. In the embodiments of the present application, when text content is input into the extract box through the fake keyboard, the text content that is being input into the extract box may be set or updated by calling the function setExtractingText.

S8: InputConnection.getExtractedText. InputConnection is an interface used to process communication between an input method and an application in Android. The text content in the extract box (getExtractedText) is obtained and updated from the fake keyboard based on the InputConnection interface.

S9: updateExtractFrameVisibility. This step may be used to update the visibility of an extract frame. When the extract view is processed, visibility of the extract view may need to be controlled. In the embodiments of the present application, after the input of text is completed through the fake keyboard, the fake screen may be hidden by calling the function updateExtractFrameVisibility. For example, when text is input through the fake keyboard, the fake screen may be displayed by calling the function updateExtractFrameVisibility. This method may be used to control the visibility state of the fake screen.

S10: doStartinput. This step may be used to start an input operation, such as keyboard input or handwriting recognition. In some input scenarios, for example, when the input method is enabled, some initialization operations of the input method may be performed or an input environment may be prepared by calling the function doStartinput.

S11: setExtractingText. After the initialization operations of the input method are performed or the input environment is prepared by calling the function doStartinput, the function setExtractingText may be further called to set or update, when text content is being input into the extract box through the fake keyboard, the text content that is being input into the extract box.

S12: End an input method process when the input method is collapsed and/or an input box of a client is changed.

All of the above technical solutions may be combined in any way, to form optional embodiments of the present application, and details are not described again herein.

In the embodiments of the present application, the three-dimensional environment generated by the extended reality device is displayed; the user interaction interface is presented in the three-dimensional environment, where the input box is displayed on the user interaction interface; the fake keyboard is displayed in the three-dimensional environment in response to the first operation for the input box; the fake screen is displayed in the adjacent area of the display location of the fake keyboard, where the extract box is displayed on the fake screen; and the corresponding input content is synchronously displayed in the extract box and the input box in response to the second operation for the fake keyboard. According to the embodiments of the present application, the fake screen with a prompt box is displayed in the adjacent area of the display location of the fake keyboard, and the corresponding input content is synchronously displayed in the extract box and the input box in response to a related operation for the fake keyboard, which is equivalent to mapping the input box to the extract box that is in the same planar area as the fake keyboard, to convert an input action of a user in the three-dimensional environment into an input action thereof in a planar space, so as to optimize a relative location of the input box and the fake keyboard. In this way, when the user operates the fake keyboard with his/her head down, specific input content can more conveniently appear in the line of sight of the user, in order to achieve the effect that the user does not need to frequently raise his/her head to confirm during input. This can improve the convenience of interaction and input efficiency on the extended reality device, thereby providing the user with a smoother and more natural input experience.

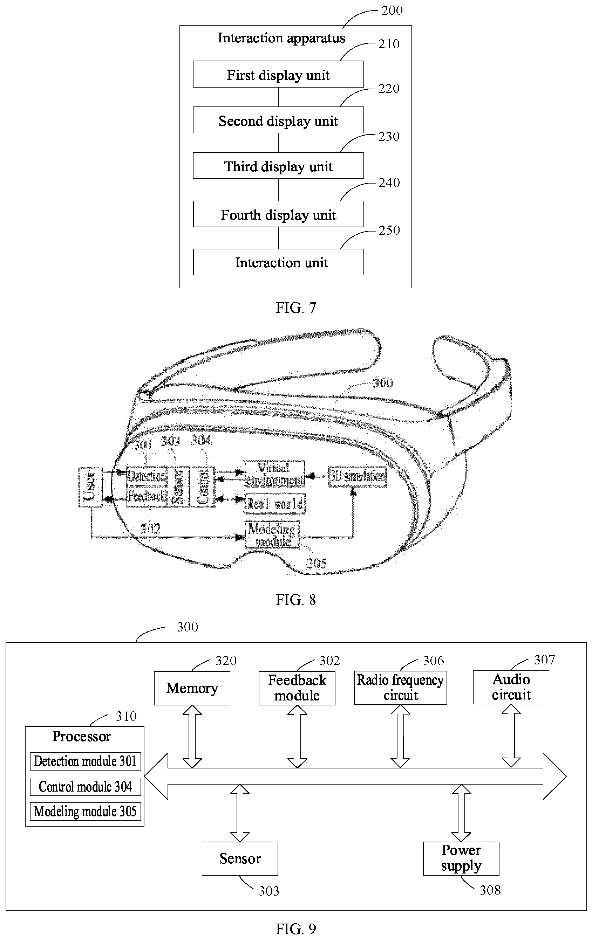

For ease of better implementing the interaction method in the embodiments of the present application, an embodiment of the present application further provides an interaction apparatus. With reference to FIG. 7, FIG. 7 is a schematic diagram of a structure of an interaction apparatus according to an embodiment of the present application. The interaction apparatus 200 may include:
a first display unit 210 configured to display a three-dimensional environment generated by an extended reality device;
a second display unit 220 configured to present a user interaction interface in the three-dimensional environment, wherein an input box is displayed on the user interaction interface;
a third display unit 230 configured to display a fake keyboard in the three-dimensional environment in response to a first operation for the input box;
a fourth display unit 240 configured to display a fake screen in an adjacent area of a display location of the fake keyboard, wherein an extract box is displayed on the fake screen; and
an interaction unit 250 configured to synchronously display corresponding input content in the extract box and the input box in response to a second operation for the fake keyboard.

In some embodiments, the interaction unit 250 is configured to:
obtain, in response to the second operation for the fake keyboard, input content that is input through the fake keyboard; and
send the input content to the extract box and the input box through an InputConnection interface for synchronous display.

In some embodiments, the interaction unit 250 may be further configured to:
obtain updated input content in response to an update operation for the input content displayed in the extract box, and synchronously display the updated input content in the input box.

In some embodiments, when synchronously displaying the updated input content in the input box, the interaction unit 250 may be configured to:
send the updated input content to the input box through the InputConnection interface for synchronous display.

In some embodiments, the fourth display unit 240 may be configured to:
display the fake screen at a plane extension of a plane on which the display location of the fake keyboard is located.

In some embodiments, the interaction unit 250 may be further configured to:
dynamically adjust a size of the extract box based on the input content.

In some embodiments, the interaction unit 250 may be further configured to:
dynamically adapt a size of the fake screen based on the dynamically adjusted size of the extract box.

In some embodiments, the interaction unit 250 may be further configured to:
hide the fake screen in response to an input completion instruction for the input content.

In some embodiments, the interaction unit 250 may be further configured to:
adjust a display location of the fake screen based on a gaze focus of a user

All or some of the units in the above interaction apparatus 200 may be implemented by software, hardware, and a combination thereof. The above units may be embedded in or independent of a processor in a terminal device in the form of hardware, or may be stored in a memory of the terminal device in the form of software, such that the processor can invoke and execute operations corresponding to the above units.

The interaction apparatus 200 may be integrated into a terminal or server that is provided with a memory and has a computing capability with a processor mounted therein, or the interaction apparatus 200 is the terminal or the server.

In some embodiments, the present application further provides a terminal device including a memory and a processor, where the memory stores a computer program, and when the processor executes the computer program, the steps of the above method embodiments are implemented.

As shown in FIG. 8, FIG. 8 is a schematic diagram of a structure of a terminal device according to an embodiment of the present application. The terminal device 300 may be generally provided in the form of glasses, a head-mounted display (HMD), or contact lenses, to implement visual perception and other forms of perception. Certainly, the terminal device is not limited to these implementation forms, and may be further miniaturized or enlarged as needed. The terminal device 300 may include, but is not limited to, the following components.

A detection module 301: It is configured to detect operation commands from a user by using a variety of sensors, and apply the operation commands to a virtual environment, such as by continuously updating images displayed on a display screen following a line of sight of the user, to enable interaction between the user and a virtual scene, such as by continuously updating content of reality based on a detected turning direction of the head of the user

A feedback module 302: It is configured to receive data from the sensor, and provide a real-time feedback for the user. The feedback module 302 may be configured to display a graphical user interface, and for example, display the virtual environment on the graphical user interface. For example, the feedback module 302 may include a display screen, etc.

A sensor 303: It is configured to receive the operation commands from the user, and apply the operation commands to the virtual environment. In addition, it is configured to provide results generated after operations to the user in various forms of feedback.

A control module 304: It is configured to control the sensor and various input/output apparatuses, including obtaining of data (such as actions and voice) of the user and outputting of perception data, such as images, vibrations, temperature and sound, to have an effect on the user, the virtual environment, and a real world.

A modeling module 305: It is configured to construct a three-dimensional model of the virtual environment, which may also include construction of sound, haptics, and various other feedback mechanisms in the three-dimensional model.

In the embodiments of the present application, a virtual scene in a three-dimensional environment may be constructed by the modeling module 305; a three-dimensional environment generated by an extended reality device may be displayed through the feedback module 302, and a user interaction interface may be presented in the three-dimensional environment; a first operation for an input box and a second operation for a fake keyboard may be obtained by the detection module 301 and/or the sensor 303; the fake keyboard may be displayed, by the feedback module 302, in the three-dimensional environment in response to the first operation for the input box that is performed by the control module 304; a fake screen may be displayed, by the feedback module 302, in an adjacent area of a display location of the fake keyboard, where an extract box is displayed on the fake screen; and corresponding input content may be synchronously displayed, by the feedback module 302, in the extract box and the input box in response to the second operation for the fake keyboard that is performed by the control module 304.

In some embodiments, as shown in FIG. 9, FIG. 9 is a schematic diagram of another structure of the terminal device according to an embodiment of the present application. The terminal device 300 further includes a processor 310 with one or more processing cores, a memory 320 with one or more computer-readable storage media, and a computer program stored on the memory 320 and executable on the processor. The processor 310 is electrically connected to the memory 320. Those skilled in the art may understand that the structure of the terminal device shown in the figure does not constitute a limitation on the terminal device, and may include more or fewer components than those shown in the figure, or combine some components, or adopt different component arrangements.

The processor 310 is a control center of the terminal device 300, and is connected to various parts of the whole terminal device 300 by using various interfaces and lines. By running or loading a software program and/or module stored in the memory 320, and invoking data stored in the memory 320, various functions of the terminal device 300 and data processing are performed, thereby performing overall monitoring on the terminal device 300.

In the embodiments of the present application, the processor 310 in the terminal device 300 may load instructions corresponding to processes of one or more applications into the memory 320 according to the following steps, and the processor 310 runs the applications stored in the memory 320, to implement various functions:
displaying a three-dimensional environment generated by an extended reality device; presenting a user interaction interface in the three-dimensional environment, wherein an input box is displayed on the user interaction interface; displaying a fake keyboard in the three-dimensional environment in response to a first operation for the input box; displaying a fake screen in an adjacent area of a display location of the fake keyboard, wherein an extract box is displayed on the fake screen; and synchronously displaying corresponding input content in the extract box and the input box in response to a second operation for the fake keyboard.

For the specific implementation of the above operations, reference may be made to the foregoing embodiments, which will not be repeated herein.

In some embodiments, the processor 310 may include a detection module 301, a control module 304, and a modeling module 305.

In some embodiments, as shown in FIG. 9, the terminal device 300 further includes: a radio frequency circuit 306, an audio circuit 307, and a power supply 308. The processor 310 is electrically connected to the memory 320, the feedback module 302, the sensor 303, the radio frequency circuit 306, the audio circuit 307, and the power supply 308, respectively. Those skilled in the art may understand that the structure of the terminal device shown in FIG. 8 or FIG. 9 does not constitute a limitation on the terminal device, and may include more or fewer components than those shown in the figure, or combine some components, or adopt different component arrangements.

The radio frequency circuit 306 may be used to receive and transmit radio frequency signals, to establish a wireless communication with a network device or other terminal devices through wireless communication, thereby receiving and transmitting signals with the network device or the other terminal devices.

The audio circuit 307 may be used to provide an audio interface between the user and the terminal device through a speaker and a microphone. The audio circuit 307 may transmit an electrical signal, which is obtained by converting received audio data, to the speaker, which then converts the electrical signal into a sound signal for output. Moreover, the microphone converts the acquired sound signal into an electrical signal, which is received by the audio circuit 307 and converted into audio data; the audio data is output to the processor 310 for processing, and is then sent to, for example, another terminal device via the radio frequency circuit 306, or is output to the memory for further processing. The audio circuit 307 may further include an earplug jack, to provide a communication between an external headset and the terminal device.

The power supply 308 is used to supply power to the components of the terminal device 300.

Although not shown in FIG. 8 or FIG. 9, the terminal device 300 may further include a camera, a wireless fidelity module, a Bluetooth module, an input module, etc., which will not be repeated herein.

In some embodiments, the present application further provides a computer-readable storage medium for storing a computer program. The computer-readable storage medium may be applied to a terminal device or a server, and the computer program causes the terminal device or the server to perform the corresponding process in the interaction method in the embodiments of the present application. For brevity, details are not described herein again.

In some embodiments, the present application further provides a computer program product. The computer program product includes a computer program. The computer program is stored in a computer-readable storage medium. A processor of a terminal device reads the computer program from the computer-readable storage medium. The processor executes the computer program so that the terminal device performs the corresponding process in the interaction method in the embodiments of the present application. For brevity, details are not described herein again.

The present application further provides a computer program. The computer program includes a computer program, and the computer program is stored in a computer-readable storage medium. A processor of a terminal device reads the computer program from the computer-readable storage medium. The processor executes the computer program so that the terminal device performs the corresponding process in the interaction method in the embodiments of the present application. For brevity, details are not described herein again.

It should be understood that the processor in the embodiments of the present application may be an integrated circuit chip with a signal processing capability. During implementation, the steps in the above method embodiments may be completed by an integrated logic circuit of hardware in the processor or an instruction in the form of software. The above processor may be a general-purpose processor, a digital signal processor (DSP), an application specific integrated circuit (ASIC), a field programmable gate array (FPGA), or other programmable logic devices, a discrete gate or transistor logic device, or a discrete hardware component. The processor may implement or perform the methods, steps, and logical block diagrams that are disclosed in embodiments of the present application. The general-purpose processor may be a microprocessor, or the processor may be any conventional processor or the like. The steps in the methods disclosed with reference to embodiments of the present application may be directly performed and completed by a hardware decoding processor, or may be performed and completed by a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in a memory. The processor reads information in the memory, and completes the steps in the above method in combination with the hardware of the processor.

It may be understood that the memory in this embodiment of the present application may be a volatile memory or a nonvolatile memory, or may include a volatile memory and a nonvolatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. By way of example but not restrictive description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). It should be noted that the memory for the system and method described herein is intended to include, but is not limited to, these and any other suitable types of memories.

Those of ordinary skill in the art may be aware that the modules and algorithm steps of various examples described in combination with the embodiments disclosed herein can be implemented in electronic hardware or a combination of computer software and electronic hardware. Whether these functions are performed in hardware or software depends on the specific application and design constraint conditions of the technical solution. A person skilled in the art can implement the described functions by using different methods for each particular application, but such implementation should not be considered as going beyond the scope of the present application.

It can be clearly understood by those skilled in the art that, for convenience and brevity of description, for the specific operation processes of the system, apparatus, and units described above, reference may be made to the corresponding processes in the foregoing method embodiments, and details are not described herein again.

In the embodiments of the present application, the term "module" or "unit" means a computer program or a part of a computer program with a predetermined function, which operates in conjunction with other related parts to achieve a predetermined objective, and may be implemented by using software, hardware (for example, a processing circuit or a memory), or a combination thereof. Similarly, one processor (or a plurality of processors or memories) may be used to implement one or more modules or units. In addition, each module or unit may be a part of an integrated module or unit including a function of the module or unit.

In the several embodiments provided in the present application, it should be understood that the disclosed system, apparatus, and method may be implemented in other manners. For example, the apparatus embodiment described above is merely an example. For example, the unit division is merely logical function division and may be other division during actual implementation. For example, a plurality of units or components may be combined or integrated into another system, or some features may be omitted or not implemented. In addition, the displayed or discussed mutual couplings, direct couplings, or communication connections may be implemented through some interfaces. The indirect couplings or communication connections between the apparatuses or the units may be implemented in electrical, mechanical, or other forms.

The units described as separate parts may or may not be physically separate, and parts displayed as units may or may not be physical units, and may be located at one position, or may be distributed on a plurality of network units. Some or all of the units may be selected according to actual needs to achieve the objectives of the solutions of the embodiments.

In addition, the various functional units in the embodiments of the present application may be integrated into one processing unit, or the various units may be physically present separately, or two or more units may be integrated into one unit. If the functions are implemented in the form of a software functional unit and sold or used as an independent product, the functions may be stored in a computer-readable storage medium. Based on such an understanding, the technical solutions of the present application essentially, or the part thereof that makes contributions to the prior art, or some of the technical solutions may be implemented in the form of a software product. The computer software product is stored in a storage medium, and includes several instructions for instructing a terminal device (which may be a personal computer or a server) to perform all or some of the steps of the methods described in embodiments of the present application. Moreover, the foregoing storage medium includes a USB flash drive, a removable hard disk, a ROM, a RAM, a magnetic disk, an optical disc, or other various media that can store program code.

The foregoing descriptions are merely specific implementations of the present application, but are not intended to limit the scope of protection of the present application. Any variation or replacement readily figured out by a person skilled in the art within the technical scope disclosed in the present application shall fall within the scope of protection of the present application. Therefore, the scope of protection of the present application shall be subject to the scope of protection of the claims.

## Claims

1. An interaction method, **characterized by** comprising:
displaying a three-dimensional environment generated by an extended reality device;
presenting a user interaction interface in the three-dimensional environment, wherein an input box is displayed on the user interaction interface;
displaying a fake keyboard in the three-dimensional environment in response to a first operation for the input box;
displaying a fake screen in an adjacent area of a display location of the fake keyboard, wherein an extract box is displayed on the fake screen; and
synchronously displaying corresponding input content in the extract box and the input box in response to a second operation for the fake keyboard.

2. The interaction method according to claim 1, **characterized in that** the synchronously displaying the corresponding input content in the extract box and the input box in response to the second operation for the fake keyboard comprises:
obtaining, in response to the second operation for the fake keyboard, input content that is input through the fake keyboard; and
sending the input content to the extract box and the input box through an InputConnection interface for synchronous display.

3. The interaction method according to claim 2, **characterized in that** the method further comprises:
obtaining updated input content in response to an update operation for the input content displayed in the extract box, and synchronously displaying the updated input content in the input box.

4. The interaction method according to claim 3, **characterized in that** the synchronously displaying the updated input content in the input box comprises:
sending the updated input content to the input box through the InputConnection interface for synchronous display.

5. The interaction method according to claim 1, **characterized in that** the displaying the fake screen in the adjacent area of the display location of the fake keyboard comprises:
displaying the fake screen at a plane extension of a plane on which the display location of the fake keyboard is located.

6. The interaction method according to claim 1, **characterized in that** the method further comprises:
dynamically adjusting a size of the extract box based on the input content.

7. The interaction method according to claim 6, **characterized in that** the method further comprises:
dynamically adapting a size of the fake screen based on the dynamically adjusted size of the extract box.

8. The interaction method according to claim 1, **characterized in that** the method further comprises:
hiding the fake screen in response to an input completion instruction for the input content.

9. The interaction method according to claim 1, **characterized in that** the method further comprises:
adjusting a display location of the fake screen based on a gaze focus of a user.

10. An interaction apparatus, **characterized by** comprising:
a first display unit configured to display a three-dimensional environment generated by an extended reality device;
a second display unit configured to present a user interaction interface in the three-dimensional environment, wherein an input box is displayed on the user interaction interface;
a third display unit configured to display a fake keyboard in the three-dimensional environment in response to a first operation for the input box;
a fourth display unit configured to display a fake screen in an adjacent area of a display location of the fake keyboard, wherein an extract box is displayed on the fake screen; and
an interaction unit configured to synchronously display corresponding input content in the extract box and the input box in response to a second operation for the fake keyboard.

11. A computer-readable storage medium, **characterized by** storing a computer program, wherein the computer program is adapted to be loaded by a processor, to perform the interaction method according to any one of claims 1 to 9.

12. A terminal device, **characterized by** comprising a processor and a memory, wherein the memory stores a computer program, and the processor is configured to perform the interaction method according to any one of claims 1 to 9 by invoking the computer program stored in the memory.
